**Europäisches Patentamt**

(19) **European Patent Office**

**Office européen des brevets**

(11) Veröffentlichungsnummer: **0 026 819**
**B1**

(12) # EUROPÄISCHE PATENTSCHRIFT

(45) Veröffentlichungstag der Patentschrift:
14.12.83

(51) Int. Cl.³: **C 09 C 1/26**

(21) Anmeldenummer: **80104558.4**

(22) Anmeldetag: **01.08.80**

(54) Verfahren zur Herstellung von geperlten Ferrocyanblau-Pigmenten.

(30) Priorität: **03.10.79 DE 2939999**

(43) Veröffentlichungstag der Anmeldung:
**15.04.81 Patentblatt 81/15**

(45) Bekanntmachung des Hinweises auf die Patenterteilung:
**14.12.83 Patentblatt 83/50**

(84) Benannte Vertragsstaaten:
**BE DE FR GB IT NL**

(56) Entgegenhaltungen:
**GB - A - 470 483**
**GB - A - 1 178 846**
**GB - A - 1 238 118**
**GB - A - 2 009 204**
**US - A - 2 232 426**

**Die Akte enthält technische Angaben, die nach dem Eingang der Anmeldung eingereicht wurden und die nicht in dieser Patentschrift enthalten sind.**

(73) Patentinhaber: **Degussa Aktiengesellschaft,
Weissfrauenstrasse 9, D-6000 Frankfurt am Main 1 (DE)**

(72) Erfinder: **Kreher, Alfons, Dr., Am Kappelgarten 19,
D-6000 Frankfurt am Main (DE)**
Erfinder: **Müller-Fokken, Leo, Mühlenweg 97,
D-5047 Wesseling (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Verfahren zur Herstellung von geperlten Ferrocyanblau-Pigmenten

Die Erfindung betrifft ein Verfahren zur Herstellung von geperlten Ferrocyanblau-Pigmenten.

Ferrocyanblau-Pigmente werden als Farbpigment bei der Herstellung von Druckfarben und Lacken verwendet.

Derartige Ferrocyanblau-Pigmente werden nach bekannten Verfahren hergestellt. Einzelheiten siehe Kittel Pigmente 1960, Seite 335, Wissenschaftliche Verlags-GmbH, Stuttgart.

Bei der Einarbeitung der Pulverpigmente in Bindemittel ist ein hoher Dispergieraufwand notwendig. Aus diesem Grunde werden Ferrocyanblau-Pigmente zunächst mit dem Bindemittel vorbenetzt. Dies bedeutet jedoch eine starke Staubentwicklung und somit eine starke Belästigung der Arbeitskräfte und der Umwelt.

Gemäss der DE-A-2 908 699.5 wird die Benetzungsfähigkeit von Ferrocyanblau-Pigment dadurch verbessert, dass man das ungetrocknete Ferrocyanblau-Pigment mit einem Netzmittel besprüht und anschliessend trocknet.

Die GB-A-1 238 118 betrifft ein Verfahren zur Granulierung von Pigmenten, Farbstoffen und Füllstoffen, durch Versetzen der wässrigen Suspension der Stoffe mit organischen Granulierhilfsmitteln und gegebenenfalls organischen Lösungsmitteln, welches dadurch gekennzeichnet ist, dass man Pigment, Farbstoffe und Füllstoffe mit Granulierhilfsmittel unter Zusatz grenzflächenaktiver Stoffe bei Temperaturen zwischen 20 und 100 °C granuliert, das nach einer Rührzeit von 1 bis 60 Minuten, vorzugsweise von 2 bis 20 Minuten, gebildete Granulat absiebt und bei einer Trockentemperatur von 30 bis 120 °C, vorzugsweise von 40 bis 60 °C, unterhalb der Schmelztemperatur der Granulierhilfsmittel oder Netzmittel trocknet.

Die GB-A-1 178 846 (Ia) betrifft die Herstellung von granulierten Industriechemikalien. Die zu granulierende Verbindung wird zu diesem Zweck in Wasser suspendiert und in Gegenwart einer organischen in Wasser unlöslichen Verbindung bei Temperaturen um 60 °C ausgefällt (Seite 2, rechte Spalte, Zeilen 107 bis 130). Man erhält auf diesem Wege Granulate mit einem Korndurchmesser im mm-Bereich (Beispiel 7, 10).

In der GB-A 2 009 204 wird ein Verfahren zur Granulierung von Pigmenten beschrieben, bei dem das Pigmentpulver mit Hilfe von Luft fluidisiert wird, die auf eine Temperatur zwischen 50 und 150 °C aufgeheizt ist. Die Granulate bilden sich beim Besprühen des fluidisierten Pulvers mit Wasser oder einer Lösung oder Suspension eines Additivsystems (Seite 3, Zeilen 33 bis 46). Das Additivsystem kann aus verschiedenen nicht-ionischen, anionischen oder kationischen oberflächenaktiven Reagentien bestehen.

Gegenstand der Erfindung ist ein Verfahren zur Herstellung von geperlten Ferrocyanblau-Pigmenten, das dadurch gekennzeichnet ist, dass man pulverförmiges Ferrocyanblau-Pigment mit einem Perlhilfsmittel vermischt und gleichzeitig in einer Verperlungsvorrichtung verperlt, wobei als Verperlungsvorrichtung alle schnellaufenden Mischer eingesetzt werden, die die Möglichkeit, eine Flüssigkeit in Form einer Verdüsung bzw. einer Verteilung durch einen schnellaufenden Messerkopf einzudosieren, bieten.

Als Perlhilfsmittel können Mineralöle und/oder Netzmittel eingesetzt werden. Als Mineralöle können alle hellen Mineralöle in einem Viskositätsbereich von $3-6 \cdot 10^{-3} \frac{N \cdot s}{m^2}$ (3–6 cp)/20 °C verwendet werden, die üblicherweise für Buch- und Offsetdruckfarben eingesetzt werden. Die Öle müssen hell und ohne, oder nur von geringer Eigenfärbung sein, um eine Farbtonverschiebung des Blaupigmentes zu vermeiden. Sie sind zusammengesetzt aus geradkettigen und verzweigten Paraffinen, Naphthenen, Olefinen und Aromaten. Der Aromatengehalt liegt je nach Sorte zwischen 6 und 14%.

Sie können in Mengen von 5 bis 30 Gew.-%, bezogen auf das eingesetzte Ferrocyanblau-Pigment verwendet werden.

Als Netzmittel können alle Netzmittel, welche die Pigmentnetzung fördern, z.B. Fettsäuren, Fettsäureester, Fettalkoholsulfonate, Lecithine und Fettamine verwendet werden. Sie können in Mengen von 1 bis 10 Gew.-%, vorzugsweise in Mengen von 2 bis 8 Gew.-%, bezogen auf das eingesetzte Ferrocyanblau-Pigment verwendet werden.

In einer bevorzugten Ausführungsform der Erfindung kann man das Ferrocyanblau-Pigment in einen schnellaufenden Pflugscharmischer geben und in diesen das Perlhilfsmittel entweder eindüsen oder durch einen hochtourig laufenden Messerkopf feinst verteilen.

Nach kurzer Bearbeitungszeit entsteht ein gut fliessendes Material, welches aufgrund der Benetzung mit dem Perlhilfsmittel wenig staubt und bei Betrachtung unter einer Lupe als mikrogeperlt zu erkennen ist. Diese Mikroperlen haben die Vorteile der grösseren Stampfdichte nach DIN 53 194 bei geringerer Staubbildung und verbesserter Dispergierbarkeit. So kann zum Beispiel die Stampfdichte von ca. 520 g/l auf 750 g/l erhöht werden, wobei sogar die Dispergierbarkeit verbessert wird, ohne dass die Farbstärke verschlechtert wird.

Als Verperlungsvorrichtung kommen alle schnellaufenden Mischer in Frage, die die Möglichkeit bieten, eine Flüssigkeit in Form einer Verdüsung bzw. einer Verteilung durch einen schnelllaufenden Messerkopf einzudosieren, z.B. Flugscharmischer, Pelletierteller, Gegenstrommischtrommel.

Die Mikroperlbildung erfolgt rasch, d.h. in einem Zeitraum von 2 bis 3 Minuten, jedoch lässt sich durch weitere intensive Bearbeitung durch hochtouriges Rühren die Dispergierbarkeit der gebildeten Perlen positiv beeinflussen.

Das erfindungsgemässe Verfahren wird anhand der folgenden Beispiele näher erläutert und beschrieben:

Beispiel 1

Verwendet wird ein Pflugscharmischer, welcher wie folgt aufgebaut ist und arbeitet:

In einem liegenden zylindrischen Behälter rotieren pflugscharähnliche Mischelemente, die auf einer horizontalen Welle versetzt angeordnet sind. Die Grösse, Anzahl, Anordnung, geometrische Form und Umfangsgeschwindigkeit der Mischwerkzeuge sind so aufeinander abgestimmt, dass sie das in den Behälter eingefüllte Produkt in eine dreidimensionale Bewegung zwingen. Die einzelnen axialen und radialen Flugbahnen der Partikel kreuzen sich. Die Partikel prallen teilweise aneinander und werden dadurch in ihren Flugbahnen abgelenkt. Sie reflektieren auch mit grosser Häufigkeit an der Trommelwand und den Mischwerkzeugen, von denen sie erneut erfasst und beschleunigt werden. Der Mischeffekt wird gesteigert durch einen separat angetriebenen hochtourig rotierenden Messerkopf. Der Messerkopf ist im unteren Teil des Mischbehälters so angeordnet, dass seine Antriebswelle jeweils zwischen den Flugkreisen zweier benachbarter Mischelemente durch die Trommelwand tritt. Die Mischelemente umfassen die rotierenden Messer.

Als Perlhilfsmittel wird ein Mineralöl mit der Handelsbezeichnung PKW F 28/31 verwandt.

Technische Daten: Flammpunkt:      130 °C
Anilinpunkt:      80 °C
Siedebeginn nach
DIN 51 751      270 °C
Siedeende:      310 °C
Viskosität
bei 20 °C:      $6,5 \cdot 10^{-6} \frac{m^2}{s}$
(6,5 cSt)

In den Pflugscharmischer mit 50 l Nutzinhalt werden 6 kg Ferrocyanblau-Pulver gegeben und 0,6 kg Mineralöl in feinem Strahl bei laufendem Messerkopf zugegeben. Das Schleuderwerk hat hierbei eine Geschwindigkeit von 120 Upm. und der Messerkopf eine Geschwindigkeit von 3.000 Upm. Die Verweilzeit im Mischer beträgt 10 Minuten.

Beispiel 2

Es wird dieselbe Maschine wie bei Beispiel 1 verwendet.

6 kg eines Ferrocyanblau-Pulvers werden in den Pflugscharmischer mit 50 l Inhalt gegeben und unter laufendem Messerkopf 600 g einer Mischung aus 1,5 Teilen 2-Heptadecenyl-4-Methyl-4-Hydroxymethyl-2-Oxazolin und 4,5 Teilen Dioctylphthalat gegeben. Das Schleuderwerk hat eine Geschwindigkeit von 180 Upm. und der Messerkopf von 3.200 Upm. Die Verweilzeit im Mischer beträgt 7 Minuten.

Die erhaltenen Mikroperlen gemäss den Beispielen 1 und 2 werden wie folgt geprüft:

1. Stampfdichte nach DIN 53 184

Die Stampfdichte der Mikroperlen beträgt nach Beispiel 1 720 g/l, nach Beispiel 2 755 g/l. Das Ausgangsprodukt hat eine Stampfdichte von 520 g/l.

2. Dispergierbarkeit

Die Dispergierbarkeit wird anhand der relativen Farbstärke beurteilt. Die Farbstärke ist ein Mass für die Ergiebigkeit des Pigments. Hat ein Pigment eine höhere Farbstärke, so ist es möglich, mit dem Einsatz von weniger Pigment zur Erzielung eines bestimmten Farbeffektes zu kommen. Zu diesem Zweck wurde das zu prüfende Blaupigment in einer Phenolharzlösung unter Verwendung der folgenden Dispergiermaschine zur Herstellung einer Tiefdruckfarbe dispergiert.

Bei dieser Dispergiermaschine handelt es sich um eine Schüttelmaschine, in der die Mahlgefässe 680 bis 690 Schüttelbewegungen in der Minute ausführen. Die Schüttelbewegung resultiert aus einer Hinundherbewegung der Achse um ± 8 mm und einer gleichzeitigen Drehbewegung um 15° nach beiden Seiten, bezogen auf die Mittellage. Als Mahlgefässe werden 250 cm³ Glasflaschen mit Schraubdeckel verwendet. Als Mahlkörper werden Glaskugeln mit folgenden Kennwerten eingesetzt: mittlerer Durchmesser 3 mm mit einer Standardabweichung von 0,5 mm, Dichte 2,6 ± 0,2 g/cm³, Härte nach Mohs 5–6, Oberflächenbeschaffenheit glatt (nach DIN 53 238), Dispergierzeit 120 Minuten.

Einwaage

64,5 g Kolophonium modifiziertes Phenolharz, Schmelzpunkt nach DIN 53 181 150–160 °C, gelöst 50%ig in Toluol
40,5 g Toluol
20,0 g Blaupigment

Beurteilung

Die Tiefdruckfarben werden in einer Schichtstärke von 6 Mikron auf Tiefdruckpapier aufgetragen und nach der Trocknung mit dem Elrephomat DFC 5 gemessen. Das Ausgangsblau wird als Standard mitgemessen.

Zur Berechnung der relativen Farbstärke benötigt man einen Remissionswert im Absorptionsmaximum, d.h. es werden die X-Werte gewählt. Aus ihnen wird mit den Kubelka-Munk-Formeln (DIN 53 234) die K/S-Werte berechnet, die direkt ein Mass für die Farbstärke sind.

Relative Farbstärke in %:

$$\frac{\text{K/S-Wert (Probe)}}{\text{K/S-Wert (Standard)}} \times 100$$

Es ergeben sich folgende relative Farbstärken:

Beispiel 1 102%
Beispiel 2 107%

Bei dem Vergleich wird berücksichtigt, dass in den Mikroperlen 10% Perlhilfsmittel enthalten sind.

Viskosität

Die Viskosität in den geprüften Tiefdruckfarben wird gegenüber dem Ausgangsblau praktisch nicht verändert. Sie wird ausgedrückt in Sekunden, gemessen nach DIN 53 211 mit einem Auslaufbecher mit 4 mm Düse. Sie beträgt bei Beispiel 1: 16 Sekunden, bei Beispiel 2: 18 Sekunden und bei Ausgangsblau: 17 Sekunden.

## Patentanspruch

Verfahren zur Herstellung von geperlten Ferrocyanblau-Pigmenten, dadurch gekennzeichnet, dass man pulverförmiges Ferrocyanblau-Pigment mit einem Perlhilfsmittel vermischt und gleichzeitig in einer Verperlungsvorrichtung verperlt, wobei als Verperlungsvorrichtung alle schnellaufenden Mischer eingesetzt werden, die die Möglichkeit, eine Flüssigkeit in Form einer Verdüsung bzw. einer Verteilung durch einen schnellaufenden Messerkopf einzudosieren, bieten.

## Claim

A process for the production of beaded ferrocyanogen blue pigments, characterised in that ferrocyanogen blue pigment is mixed with a beading auxiliary and is simultaneously beaded in a beading apparatus.

## Revendication

Procédé de préparation de pigments bleus de ferrocyanure en perles, caractérisé en ce que l'on mélange un pigment bleu de ferrocyanure en poudre avec un agent de granulation et simultanément, on granule dans un dispositif de granulation qui peut être constitué par tout mélangeur rapide permettant l'introduction d'un liquide par pulvérisation, ou par répartition à l'aide d'une tête portelames à rotation rapide.